# EUROPÄISCHE PATENTANMELDUNG

(11) **EP 2 708 345 A1**
(43) Veröffentlichungstag der Anmeldung: **19.03.2014**
(21) Anmeldenummer: 12184697.6
(22) Anmeldetag: 17.09.2012
(51) Int. Cl.: B29C 45/28, B29C 45/27

(54) **Einspritzvorrichtung für Spritzgussprozess**

(71) Anmelder: Bayer MaterialScience AG, 51373 Leverkusen (DE)
(72) Erfinder: Die Erfindernennung liegt noch nicht vor
(74) Vertreter: BIP Patents

(57) **Zusammenfassung**

Die Erfindung betrifft eine Einspritzvorrichtung für den Spritzgussprozess, umfassend eine hohle Heißkanalnadel (2) mit einem innenliegenden Röhrchen (1), sowie eine Heißkanaldüse umfassend die hohle Heißkanalnadel (2) mit innenliegendem Röhrchen (1), die zum direkten Anspritzen von Spritzgussbauteilen geeignet sind.

## Beschreibung

Die Erfindung betrifft eine Einspritzvorrichtung für den Spritzgussprozess, umfassend eine Heißkanalnadel, die hohl ist, mit einem innenliegenden Röhrchen sowie eine Heißkanaldüse umfassend die Heißkanalnadel, die hohl ist, mit innenliegendem Röhrchen, die zum direkten Anspritzen von Spritzgussbauteilen geeignet sind.

Im Spritzgussprozess wird nach Stand der Technik Heißkanäle mit Nadelverschlusssystem benutzt, die über massive (nicht hohle), nicht temperierte Nadeln verfügen.

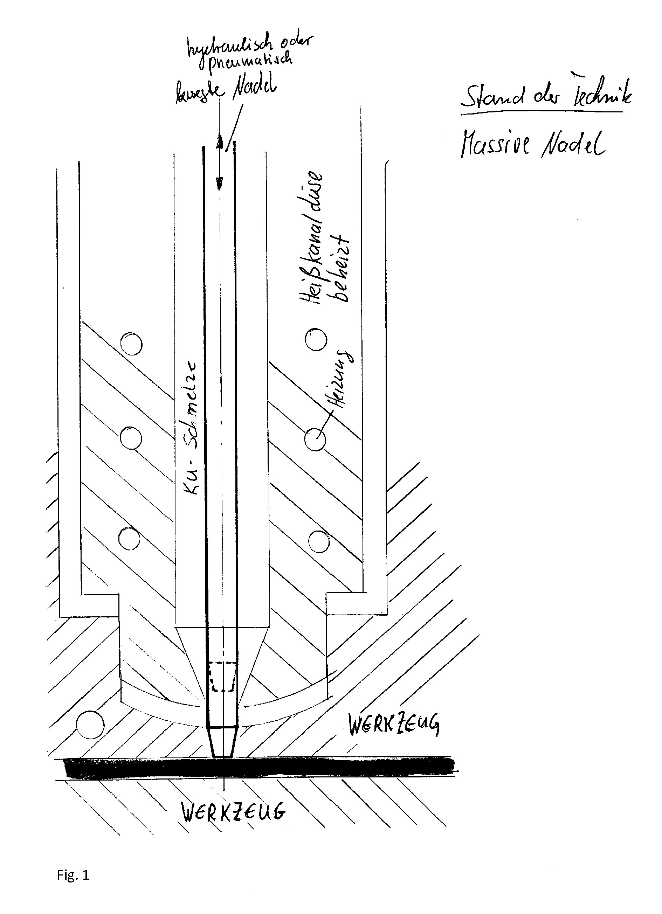

Während des gesamten Spritzprozesses steht eine Heißkanalnadel in schmelzflüssigem Kunststoff, d.h. es erfolgt ein Wärmetransport in Richtung der Nadelspitze, die nach dem Schließen am Kunststoffbauteil anliegt. Während des Einspritzvorgangs kommt es zusätzlich durch Schererwärmung der schmelzeführenden Bereiche durch den vorbeiströmenden Kunststoff. Problematisch bei massiven Nadeln ist, dass sich diese selbst nicht kühlen lassen. Eine Wärmeabfuhr kann somit hauptsächlich nur über den umliegenden Werkzeugbereich erfolgen, zu dem nur im Bereich der Nadelspitze im geschlossenen Zustand Kontakt besteht. Wird der umliegende Werkzeugbereich jedoch zu stark gekühlt, sinkt die Temperatur der Kunststoffschmelze in der Heißkanaldüse zu stark, was zu Verarbeitungsproblemen führen kann. Figur 1 zeigt eine herkömmliche Heißkanaldüse mit einer massiven Heißkanalnadel.

Problematisch ist der nach dem Stand der Technik kaum zu beeinflussende Energieeintrag über die Nadelspitze in das Kunststoffbauteil. Dieser führt zu einer stärkeren Schwindung der umliegenden Schmelze, was sich in lokalen Einfallstellen oder ähnlichen Problemen äußert. Zudem ist bekannt, dass sich zwischen Kunststoffschmelzen und heißen Oberflächen große Haftkräfte entwickeln können. Diese können zu Verformungen oder anderen Beschädigungen des Kunststoffteils beim Entformen aus dem Formnest führen.

Gegenstand der vorliegenden Erfindung ist eine Einspritzvorrichtung für den Spritzgussprozess, umfassend eine Heißkanalnadel, die hohl ist, mit einem innenliegenden Röhrchen sowie eine Heißkanaldüse umfassend die hohle Heißkanalnadel mit innenliegendem Röhrchen. Der Vorteil der vorliegenden Erfindung liegt darin, dass sich die Heißkanalnadel mit innenliegendem Röhrchen aktiv kühlen lässt und somit die oben genannten Probleme beseitigt.

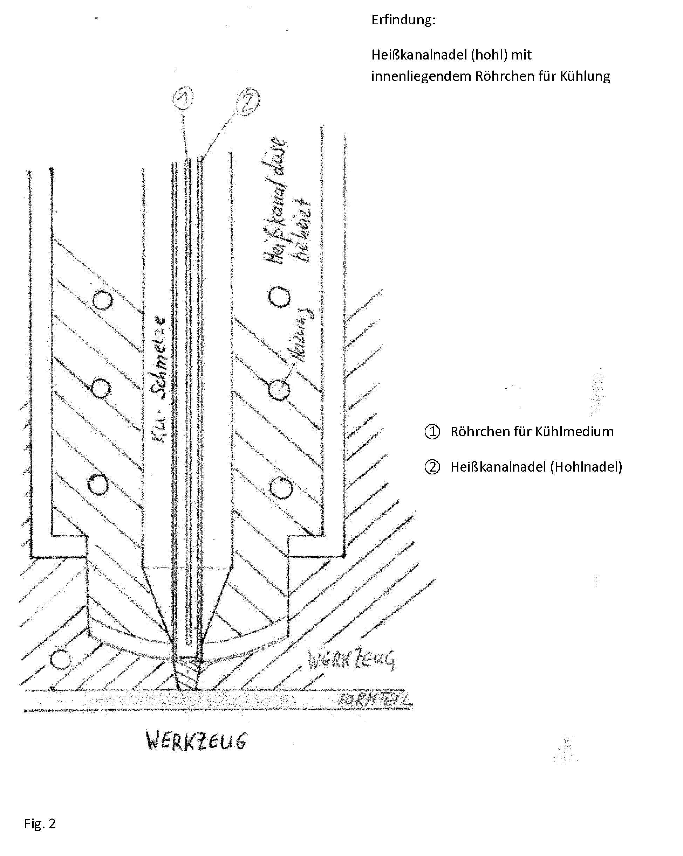

Figur 2 zeigt die erfindungsgemäße Heißkanalnadel mit innenliegendem Röhrchen sowie die Heißkanaldüse umfassend die Heißkanalnadel mit innenliegendem Röhrchen.

Dazu wird die massive Heißkanalnadel entweder bis in den Bereich der Spitze hohlgebohrt oder als an der Spitze verschlossenes Rohr ausgeführt. Durch dieses Sackloch lässt sich die Nadel von innen mit Hilfe eines Temperiermediums temperieren. Temperiermedien können z.B. Öle oder Gase in unterschiedlichen Aggregatszuständen (z.B. Stickstoff oder Kohlendioxid) sein. Bevorzugt erfolgt die Temperierung über ein in das Sackloch eingeführtes Röhrchen oder ähnliches, durch beispielsweise flüssiges CO2 zugeführt wird. Das Röhrchen endet im Inneren der Nadel in der Nadelspitze, das austretende CO2 verdampft dort auf Grund der plötzlichen Volumenvergrößerung und zieht eine über den Volumenstrom des Gases einstellbare Menge Wärmeenergie ab (Verdampfungswärme).

Die Heißkanalnadel ist beweglich und kann hydraulisch, pneumatisch oder elektrisch bewegt werden.

Anwendungsgebiete sind alle Kunststoffbauteile, bei denen eine Direktanspritzung genutzt wird. Hierzu gehören beispielsweise dekorative Bauteile, Hochglanzoberflächen und optische Bauteile. Bevorzugt Kunststoffbauteile sind aus Thermoplasten, wie beispielsweise Polycarbonat, Polyester, Polyolefine, Poly(meth)acrylate (wie PMMA),Polyamid, ABS oder SAN Copolymersisate oder Mischungen dieser Polymere mit genannten Polymeren oder mit weiteren Polymeren.

## Patentansprüche

1. Heißkanalnadel, die hohl ist, mit einem innenliegenden Röhrchen.

2. Heißkanaldüse umfassend Heißkanalnadel, die hohl ist, mit einem innenliegenden Röhrchen.

3. Verwendung einer Heißkanalnadel gemäß Anspruch 1 im Spritzgussprozess.
